# EUROPÄISCHE PATENTSCHRIFT

(11) **EP 3 708 030 B1**
(45) Veröffentlichungstag und Bekanntmachung des Hinweises auf die Patenterteilung: **03.05.2023**
(21) Anmeldenummer: 19163109.2
(22) Anmeldetag: 15.03.2019
(51) Int. Cl.: A47B 13/00, A44B 11/25, A47B 87/00, F16B 12/26

(54) **MÖBEL MIT SICHERUNGSMECHANISMUS**
FURNITURE WITH SAFETY MECHANISM
MEUBLE AVEC MECANISME DE SECURITE

(43) Veröffentlichungstag der Anmeldung: 16.09.2020
(73) Patentinhaber: Nowy Styl Deutschland GmbH, 31595 Steyerberg (DE)
(72) Erfinder: Klimke, Benjamin, 31595 Steyerberg (DE)
(74) Vertreter: advotec.

(56) Entgegenhaltungen:
- EP-A1- 2 932 870
- EP-A2- 0 261 083
- CH-A- 358 562
- DE-U1-202010 017 816
- US-A- 4 530 136

## Beschreibung

Die Erfindung betrifft ein Möbel mit einem ersten Möbelelement, einem zweiten Möbelelement und einem Sicherungsmechanismus zur Sicherung des ersten Möbelelements an dem zweiten Möbelelement.

Ein Möbel dieser Art ist aus dem Stand der Technik bekannt und umfasst zwei Möbelelemente. Das bekannte Möbel ist beispielweise ein Tisch mit einem Tischgestell und einer Tischplatte, die gegenüber dem Tischgestell verschoben werden kann. Um ein ungewolltes Verstellen der Tischplatte zu verhindern, umfasst der Tisch einen Sicherungsmechanismus, der die Tischplatte an dem Tischgestell sichert.

Aus Druckschrift US 4 530 136 A ist ein Möbel mit einem ersten Möbelelement, einem zweiten Möbelelement und einem Sicherungsmechanismus bekannt. Das erste Möbelelement ist gegenüber dem zweiten Möbelelement bewegbar und mittels des Sicherungsmechanismus an dem zweiten Möbelelement sicherbar.

Bekannte Sicherungsmechanismen sind jedoch in der Regel nur umständlich, insbesondere nicht einhändig betätigbar. Dies hat eine geringe Bedienfreundlichkeit zur Folge.

Der Erfindung liegt daher die Aufgabe zugrunde, ein Möbel mit einem verstellbaren Möbelelement zu schaffen, welches die Nachteile des Stands der Technik überwindet. Insbesondere soll ein Möbel bereitgestellt werden, das einen Sicherungsmechanismus umfasst, der auf einfache Weise mit einer Hand betätigbar ist.

Diese Aufgabe ist erfindungsgemäß durch das Möbel mit den Merkmalen des Anspruchs 1 gelöst.

Erfindungsgemäß wird demnach ein Möbel vorgeschlagen, umfassend ein erstes Möbelelement, ein zweites Möbelelement und einen Sicherungsmechanismus zur Sicherung des ersten Möbelelements an dem zweiten Möbelelement. Der Sicherungsmechanismus umfasst ein Betätigungselement, mindestens ein Sicherungselement und einen Grundkörper mit einer Aufnahme, in der das Betätigungselement verschiebbar gelagert ist, und ist zwischen einem Sicherungszustand und einem Freigabezustand verstellbar. In dem Sicherungszustand ist das erste Möbelelement an dem zweiten Möbelelement gesichert. Wenn das Sicherungselement in dem Freigabezustand ist, ist das erste Möbelelement gegenüber dem zweiten Möbelelement bewegbar. Das Betätigungselement ist aus einer Ruhelage in zwei Richtungen jeweils in eine Betätigungslage verschiebbar, in der das Sicherungselement in einer Sicherungselement-Freigabestellung ist. Wenn das Sicherungselement in der Sicherungselement-Freigabestellung ist, ist der Sicherungsmechanismus aus dem Sicherungszustand in den Freigabezustand verstellbar.

Befindet sich der Sicherungsmechanismus also in dem Sicherungszustand, ist das erste Möbelelement an dem zweiten Möbelelement gesichert. Dies erfolgt insbesondere mittels des Sicherungselements. Das Sicherungselement befindet sich in dem Sicherungszustand des Sicherungsmechanismus in einer Sicherungselement-Normalstellung, in welcher es das erste Möbelelement an dem zweiten Möbelelement sichert. In dem Freigabezustand des Sicherungsmechanismus befindet sich das Sicherungselement hingegen in der Sicherungselement-Freigabestellung, wobei das Sicherungselement das erste Möbelelement in dieser Stellung nicht an dem zweiten Möbelelement sichert. Vielmehr ist das erste Möbelelement gegenüber dem zweiten Möbelelement bewegbar.

Der Sicherungsmechanismus ist also mittels des Betätigungselements zwischen einem Sicherungszustand und einem Freigabezustand verstellbar, wobei das Betätigungselement hierbei durch Verschieben in eine erste Betätigungslage oder eine zweite Betätigungslage betätig wird. Ein derartiges Verschieben kann mit einer Hand ausgeführt werden. Das Betätigungselement ist somit auf einfache Weise mit nur einer Hand betätigbar, wobei gleichzeitig das erste Möbelelement gegenüber dem zweiten Möbelelement verschoben werden kann.

Bei den Betätigungslagen handelt es sich beispielsweise um Endstellungen des Betätigungselements, in welchen das Sicherungselement in der Sicherungselement-Freigabestellung ist, so dass sich der Sicherungsmechanismus in seinem Freigabezustand befindet.

Die erste Verschieberichtung des Betätigungselements kann der zweiten Verschieberichtung entgegengesetzt sein. Auch können die beiden Verschieberichtungen Richtungen entsprechen, in welche das erste Möbelelement gegenüber dem zweiten Möbelelement verschiebbar ist. Wird also das Betätigungselement betätigt, d.h. mit einer in eine der beiden Verschieberichtungen wirkenden externen Kraft beaufschlagt, wird das Betätigungselement in eine entsprechende Betätigungslage verschoben, wobei die Betätigungslagen jeweils Endstellungen des Betätigungselements darstellen. Befindet sich das Betätigungselement in einer der beiden Betätigungslagen und wird weiterhin betätigt, wird die auf das Betätigungselement wirkende Kraft daher an das erste Möbelelement übertragen. Hierdurch wird das erste Möbelelement gegenüber dem zweiten Möbelelement bewegt, wobei die Bewegungsrichtung des ersten Möbelelements der Verschieberichtung des Betätigungselements in die jeweilige Betätigungslage entspricht. Die Betätigung des Betätigungselements und das Bewegen des ersten Möbelelements sind somit intuitiv, wodurch die Bedienfreundlichkeit des Möbels weiter erhöht wird.

Bei einer vorteilhaften Ausführungsform des Möbels nach der Erfindung umfasst das Sicherungselement an einem dem zweiten Möbelelement zugewandten Ende einen Vorsprung, so dass es nach Art eines Hakens ausgebildet ist. Ist der Sicherungsmechanismus in dem Sicherungszustand, hintergreift der Vorsprung das zweite Möbelelement. Somit ist das erste Möbelelement an dem zweiten Möbelelement gesichert, wodurch ein ungewolltes Verstellen verhindert ist.

Das Sicherungselement kann an einem dem zweiten Möbelelement zugewandten Ende bzw. stirnseitig eine Schräge umfasst. Wird der Sicherungsmechanismus aus dem Freigabezustand in den Sicherungszustand verstellt, wirkt die Schräge mit dem zweiten Möbelelement derart zusammen, dass das Sicherungselement in die Sicherungselement-Freigabestellung verstellt wird. Folglich bedarf es in diesem Fall zum Verstellen des Sicherungselements in den Sicherungselement-Freigabezustand keiner Betätigung des Betätigungselements.

Bei einer beispielhaften Ausführungsform des Möbels nach der Erfindung umfasst das Sicherungselement ein Führungselement. Das Führungselement wirkt mit einem Zapfen des Betätigungselements derart zusammen, dass das Sicherungselement in die Sicherungselement-Freigabestellung verstellt wird, wenn das Betätigungselement betätigt wird. Das Sicherungselement kann somit durch Verschieben des Betätigungselements auf einfache Weise in die Sicherungselement-Freigabestellung verstellt werden. Hierdurch befindet sich der Sicherungsmechanismus in dem Freigabezustand, in welchem das erste Möbelelement gegenüber dem zweiten Möbelelement verschoben werden kann.

Das Sicherungselement und das Betätigungselement können zusammen mit dem Führungselement bzw. dem Zapfen als einstückiges Spritzgussteil, insbesondere Kunststoffspritzgussteil ausgebildet sein. Somit sind das Sicherungselement und das Betätigungselement auf einfache Weise herstellbar.

Bei einer bevorzugten Ausführungsform des Möbels nach der Erfindung hat das Führungselement des Sicherungselements eine Kurvenbahn und der Zapfen des Betätigungselements ist an der konkaven Seite des Führungselements angeordnet. Durch die konkave Form des Führungselements ist das Sicherungselement sowohl durch Verschieben des Betätigungselements in die erste Richtung, als auch durch Verschieben des Betätigungselements in die der ersten Richtung entgegengesetzte zweite Richtung betätigbar.

Bei einer alternativen Ausführungsform des Möbels nach der Erfindung umfasst das Betätigungselement das Führungselement und das Sicherungselement den Zapfen, der mit dem Führungselement zusammenwirkt.

Bei einer bevorzugten Ausführungsform des Möbels nach der Erfindung ist das Sicherungselement elastisch verformbar. Somit stellt sich das Sicherungselement aus einem ausgelenkten bzw. verformten Zustand bei Freigabe, d.h. bei Wegnahme einer externen Kraft selbstständig in eine Ruhelage zurück. Die Ruhelage entspricht beispielsweise der Sicherungselement-Normalstellung, in der die Sicherungselemente derart angeordnet sind, dass sie in einem Sicherungszustand des Sicherungsmechanismus das erste Möbelelement an dem zweiten Möbelelement sichern. Sobald die Betätigung des Betätigungselements endet, kehrt das Sicherungselement selbstständig aus der Sicherungselement-Freigabestellung in die Sicherungselement-Normalstellung zurückstellt. Durch das Zusammenwirken des Führungselements des Sicherungselements und des Zapfens des Betätigungselements wird hierbei ferner auch das Betätigungselement in seine Ruhelage verschoben bzw. zurückgestellt.

Vorteilhafterweise umfasst das Möbel mindestens ein Anschlagelement, das durch Verschieben des Betätigungselements aus einer Anschlagelement-Normalstellung in eine Anschlagelement-Freigabestellung verstellbar ist. Wenn das Anschlagelement in der Anschlagelement-Normalstellung ist, ist ein Verstellen des Sicherungsmechanismus in den Sicherungszustand gesperrt. Ist das Anschlagelement hingegen in der Anschlagelement-Freigabestellung, kann der Sicherungsmechanismus in den Sicherungszustand verstellt werden. Somit wird ein ungewolltes Verstellen des Sicherungsmechanismus in den Sicherungszustand verhindert.

Bei einer beispielhaften Ausführungsform des Möbels nach der Erfindung umfasst das Anschlagelement an einem dem zweiten Möbelelement zugewandten Ende eine Rampe. Wird der Sicherungsmechanismus aus dem Sicherungszustand in den Freigabezustand verstellt, wirkt die Rampe mit dem zweiten Möbelelement derart zusammen, dass das Anschlagelement in die Anschlagelement-Freigabestellung verstellt wird. Bei Betätigung des Betätigungselements kann der Sicherungsmechanismus somit aus dem Sicherungszustand in den Freigabezustand verstellt werden, unabhängig davon, ob auch das Anschlagelement durch eine Betätigung des Betätigungselements aus der Anschlagelement-Normalstellung in die Anschlagelement-Freigabestellung verstellt wird. Vielmehr erfolgt dies durch das Zusammenwirken der Rampe mit dem zweiten Möbelelement.

Bei einer vorteilhaften Ausführungsform des Möbels nach der Erfindung umfasst das Betätigungselement ein Führungselement und das Anschlagelement hat eine Aufdickung, einen Vorsprung oder eine Schräge. Wird das Betätigungselement in eine erste der Betätigungslagen verschoben, wirkt das Führungselement mit der Aufdickung, dem Vorsprung bzw. der Seitenwand des Anschlagelements derart zusammen, dass das Anschlagelement in die Anschlagelement-Freigabestellung verstellt wird. Das Anschlagelement kann somit auf einfache Weise durch einhändige Betätigung des Betätigungselements in die Anschlagelement-Freigabestellung verstellt werden.

Die erste Verschieberichtung des Betätigungselements in die erste Betätigungslage kann einer Bewegungsrichtung entsprechen, in welche das erste Möbelelement verschoben wird, um an dem zweiten Möbelelement gesichert zu werden. Das erste Möbelelement ist somit auf intuitive Weise an dem zweiten Möbelelement sicherbar, wodurch die Bedienfreundlichkeit des erfindungsgemäßen Möbels weiter erhöht wird.

Das Betätigungselement und das Führungselement sind beispielsweise als einstückiges Spritzgussteil, insbesondere Kunststoffspritzgussteil ausgebildet, so dass diese kostengünstig herstellbar sind.

Bei einer vorteilhaften Ausführungsform des Möbels nach der Erfindung ist das Anschlagelement elastisch verformbar, so dass es sich bei Wegnahme einer externen Kraft selbstständig aus der Anschlagelement-Freigabestellung, die einem ausgelenkten Zustand des Anschlagelements entspricht, in eine Ruhelage, insbesondere die Anschlagelement-Normalstellung zurückstellt. Die Anschlagelement-Freigabestellung entspricht in dem vorliegenden Fall einem ausgelenkten Zustand des Anschlagelements. Ferner wird durch das Zusammenwirken der Aufdickung des Anschlagelements mit dem Führungselement des Betätigungselements auch das Betätigungselement in seine Ruhelage zurückgestellt.

Der Grundkörper kann ein einstückiges Kunststoffspritzgussteil sein. Somit ist dieser kostengünstig herstellbar und kann eine komplexe Geometrie aufweisen. Auch kann der Grundkörper Versteifungsrippen umfassen. Hierdurch wird die Stabilität des Grundkörpers erhöht.

Der Grundkörper kann das Sicherungselement und das Anschlagelement umfassen, wobei diese ein einstückiges Kunststoffspritzgussteil bilden.

Bei einer bevorzugten Ausführungsform des Möbels nach der Erfindung umfasst der Sicherungsmechanismus zwei Sicherungselemente und insbesondere auch zwei Anschlagelemente. Die Sicherungselemente und die Anschlagelemente können jeweils zueinander spiegelsymmetrisch ausgebildet sein. Somit wird die Sicherungswirkung des Sicherungsmechanismus erhöht. Des Weiteren wird die Kraft je Sicherungselement bzw. je Anschlagelement reduziert, so dass diese jeweils geringeren Stabilitätsanforderungen genügen müssen.

Auch kann der Sicherungsmechanismus des erfindungsgemäßen Möbels ein Rückstellelement umfasst, welches das Betätigungselement in die Ruhelage zurückstellt. Aufgrund des Zusammenwirkens des Führungselements des Sicherungselements mit dem Zapfen des Betätigungselements bzw. der Aufdickung des Anschlagelements mit dem Führungselement des Betätigungselements kehren ferner auch das Sicherungselement und das Anschlagelement in die Sicherungselement-Normalstellung bzw. die Anschlagelement-Normalstellung zurück, wenn das Betätigungselement in die Ruhelage zurückgestellt wird. Somit ist gewährleistet, dass sich das Sicherungselement und das Anschlagelement in einem unbetätigten Zustand des Betätigungselements in der Sicherungselement-Normalstellung bzw. der Anschlagelement-Normalstellung befinden.

Bei einer vorteilhaften Ausführungsform des Möbels nach der Erfindung ist das Möbel ein Tisch, insbesondere ein Tisch mit einer verschiebbaren Tischplatte. Mittels des Sicherungsmechanismus kann die verschiebbare Tischplatte, die ein erstes Tischelement bildet, an einem zweiten Tischelement, wie beispielsweise einem Tischgestell, gesichert werden.

Weitere Vorteile und vorteilhafte Ausgestaltungen des Gegenstandes der Erfindung sind der Beschreibung, der Zeichnung und den Ansprüchen entnehmbar. Ein Ausführungsbeispiel eines Tischs nach der Erfindung ist in der Zeichnung schematisch vereinfacht dargestellt und wird in der nachfolgenden Beschreibung näher erläutert. Es zeigt:
- Figur 1: eine Vorderansicht eines erfindungsgemäßen Tischs;
- Figur 2: eine Draufsicht des Tischs nach Figur 1 in einem Sicherungszustand eines Sicherungsmechanismus;
- Figur 3: eine Figur 2 entsprechende Ansicht, jedoch in einem Freigabezustand des Sicherungsmechanismus;
- Figur 4: eine Unteransicht des Sicherungsmechanismus;
- Figur 5: eine perspektivische Draufsicht des Sicherungsmechanismus;
- Figur 6: eine Seitenansicht des Sicherungsmechanismus des erfindungsgemäßen Tischs;
- Figur 7: eine perspektivische Ansicht eines Betätigungselements des Sicherungsmechanismus;
- Figur 8a: eine Vorderansicht eines Teilbereichs des erfindungsgemäßen Tischs;
- Figur 8b: eine Unteransicht des in Figur 8a gezeigten Teilbereichs des erfindungsgemäßen Tischs, wobei eine Tischplatte des Tischs in einer ersten Endposition ist, Sicherungselemente des Sicherungsmechanismus in einer Sicherungselement-Normalstellung sind und Anschlagelemente des Sicherungsmechanismus in einer Anschlagelement-Normalstellung sind;
- Figur 8c: eine Schnittansicht des in Figur 8b gezeigten Teilbereichs des erfindungsgemäßen Tischs entlang der Linie IIX-IIX in Figur 8a;
- Figur 9: eine Figur 8c entsprechende Ansicht, wobei die Sicherungselemente des Sicherungsmechanismus in einer Sicherungselement-Freigabestellung sind;
- Figur 10: eine Figur 9 entsprechende Ansicht, wobei die Tischplatte in einer Zwischenposition ist;
- Figur 11: eine Figur 10 entsprechende Ansicht, wobei die Sicherungselemente in der Sicherungselement-Normalstellung sind;
- Figur 12a: eine Figur 11 entsprechende Ansicht, wobei die Tischplatte in einer weiteren Zwischenposition ist;
- Figur 12b: eine perspektivische Ansicht des in Figur 12a dargestellten Teilbereichs des erfindungsgemäßen Tischs;
- Figur 12c: eine perspektivische Detailansicht des Bereichs XII in Figur 12b;
- Figur 13a: eine Figur 11 entsprechende Ansicht, wobei die Tischplatte in einer weiteren Zwischenposition ist, die Sicherungselemente in der Sicherungselement-Freigabestellung sind und die Anschlagelemente in einer Anschlagelement-Freigabestellung sind;
- Figur 13b: eine perspektivische Ansicht des in Figur 13a dargestellten Teilbereichs des erfindungsgemäßen Tischs; und
- Figur 13c: eine perspektivische Detailansicht des Bereichs XIII in Figur 13b.

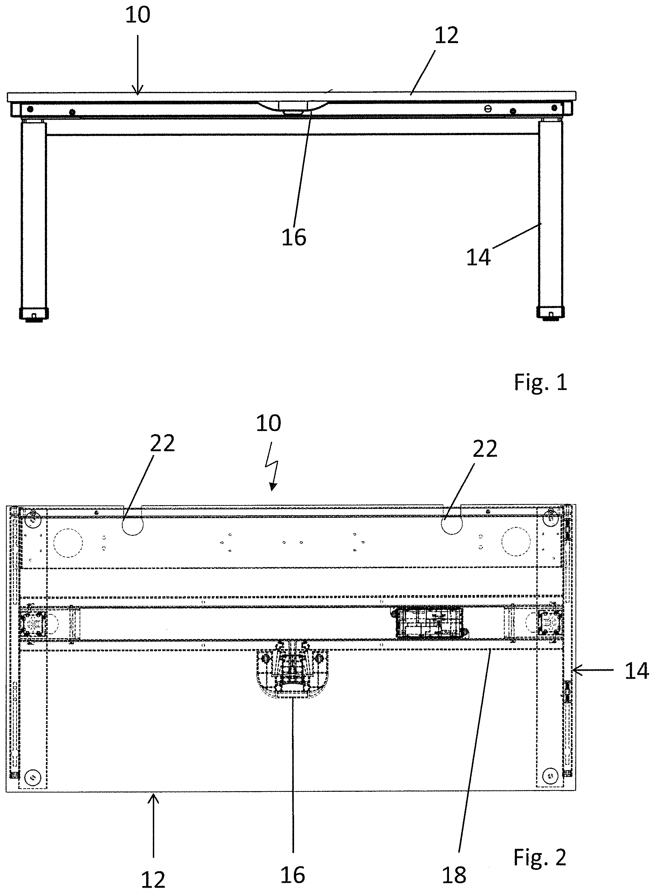

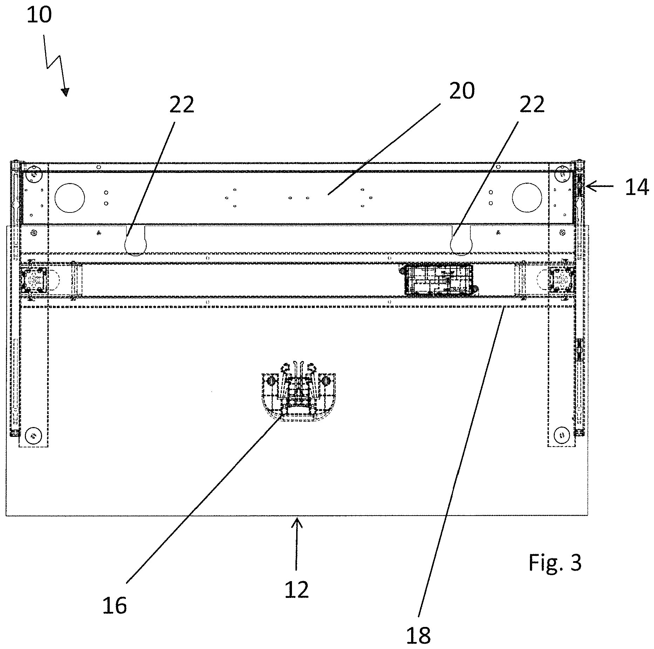

In der Zeichnung ist ein Tisch 10 mit einer Tischplatte 12, einem Tischgestell 14 und einem Sicherungsmechanismus 16 dargestellt. Die Tischplatte 12 ist zwischen einer ersten Endposition und einer zweiten Endposition verschiebbar auf dem Tischgestell 14 gelagert. Figur 2 zeigt den Tisch 10 in der ersten Endposition. In dieser ist die Tischplatte 12 mittels des Sicherungsmechanismus 16 an dem Tischgestell, insbesondere einer Querstrebe 18 des Tischgestells 16 gesichert. In der in Figur 3 gezeigten zweiten Endposition der Tischplatte 16 ist der Sicherungsmechanismus in einem Freigabezustand und ein Kabelkanal 20, der am hinteren Rand des Tischs 10 in Tischquerrichtung verläuft und als Metallwanne oder Kunststoffwanne ausgebildet ist, ist nach oben geöffnet. In der ersten Endposition überdeckt die Tischplatte 12 den Kabelkanal 20.

Die Tischplatte 12 umfasst in einem in Tischtiefenrichtung hinteren Bereich Ausnehmungen 22. Befindet sich die Tischplatte 12 in der ersten Endposition, sind die Ausnehmungen 22 in Tischhochrichtung über dem Kabelkanal 20 angeordnet. Somit können Kabel aus dem Kabelkanal 20 an die Oberseite der Tischplatte 12 geführt werden.

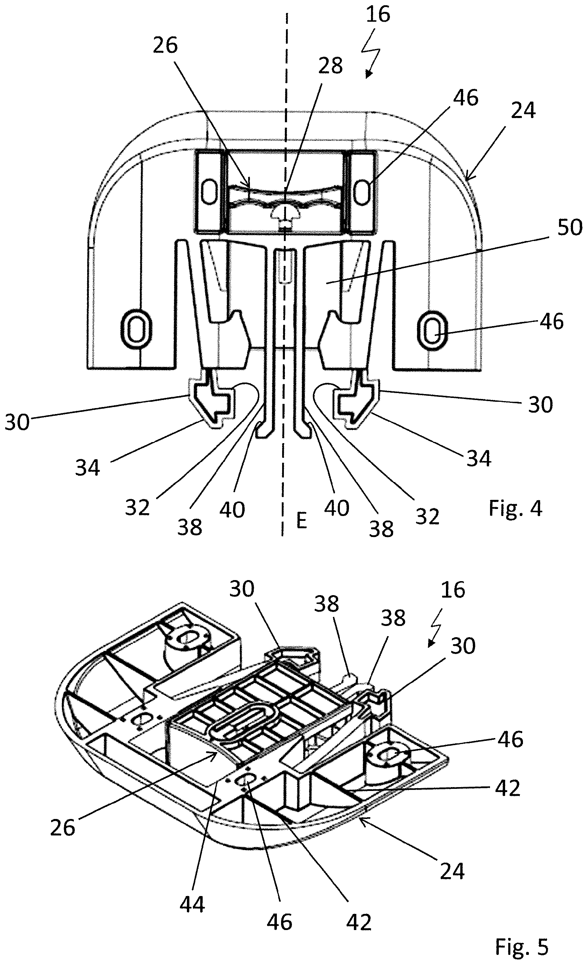

In den Figuren 4 bis 6 ist der Sicherungsmechanismus 16 gezeigt. Der Sicherungsmechanismus 16 ist bezüglich einer Ebene E spiegelsymmetrisch ausgebildet und umfasst einen Grundkörper 24 sowie ein Betätigungselement 26. Die Ebene E ist in Figur 4 als Strichlinie dargestellt und verläuft senkrecht zur Bildebene.

Der Grundkörper 24 ist als einstückiges Kunststoffspritzgussteil ausgebildet und umfasst Rippen 42 zur Verstärkung. Der Grundkörper 24 umfasst ferner zwei Sicherungselemente 30, zwei Anschlagelemente 38, eine Aufnahme 44 und vier Ausnehmungen 46 zur Anbindung bzw. Montage des Sicherungsmechanismus 16 an der Tischplatte 12.

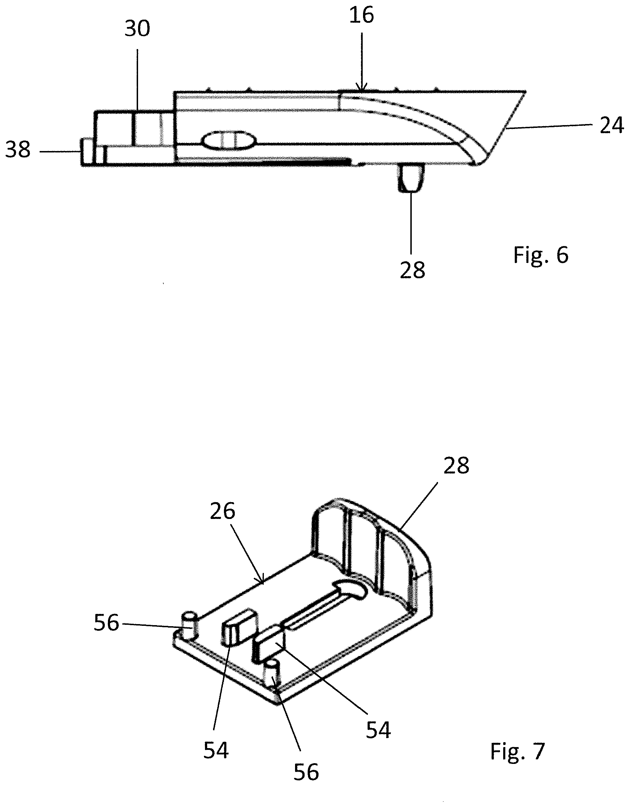

In der Aufnahme 44 ist das Betätigungselement 26 gelagert. Das Betätigungselement 26 ist aus einer in Figur 4 dargestellten Ruhelage in zwei Richtungen in eine erste bzw. eine zweite Betätigungslage verschiebbar. Die beiden Verschieberichtungen des Betätigungselements 26 entsprechen den Verschieberichtungen der Tischplatte 12, d.h. den Richtungen, in welche die Tischplatte 12 gegenüber dem Tischgestell 14 verschiebbar ist. Das Betätigungselement 26 umfasst ein Greifelement 28 und eine Grundplatte 50 mit zwei Führungselementen 54 und zwei Zapfen 56. Eine Detailansicht des Betätigungselements 26 ist Figur 7 zu entnehmen.

Die zwei Sicherungselemente 30 des Grundkörpers 24 haben an einem Ende, das in montiertem Zustand des Sicherungsmechanismus 16 der Querstrebe 18 zugewandt ist, jeweils einen Sicherungshaken 32 und eine stirnseitige Schräge 34. An den Sicherungselementen 30 ist an einem in Tischhochrichtung dem Betätigungselement 26 gegenüberliegenden Bereich jeweils ein Führungselement 48 ausgebildet. Das Führungselement 48 ist gekrümmt bzw. folgt einer Kurvenbahn und wirkt mit einem korrespondierenden Zapfen 56 des Betätigungselements 26 zusammen. Der Zapfen 56 ist auf der konkaven Seite des Führungselements 48 angeordnet.

Wenn sich das Betätigungselement 26 in der Ruhelage befindet, sind die Zapfen 56 des Betätigungselements 26 jeweils an dem Scheitelpunkt des betreffenden Führungselements 48 angeordnet. Wird das Betätigungselement 26 betätigt, das heißt durch externe Krafteinwirkung aus der Ruhelage in eine der beiden Betätigungsrichtungen in die erste bzw. zweite Betätigungslage verschoben, werden die Sicherungselemente 30 durch das Zusammenwirken der Zapfen 56 und der Führungselemente 48 jeweils aus einer Sicherungselement-Normalstellung in eine Sicherungselement-Freigabestellung verstellt. Hierbei werden die Sicherungselemente 30 elastisch verformt. In der Sicherungselement-Freigabestellung sind die beiden Sicherungselemente 30 in Richtung des Betätigungselements 26 verschwenkt. Wird das Betätigungselement 26 freigegeben bzw. wirkt keine Kraft mehr auf das Betätigungselement 26 ein, stellen sich die Sicherungselemente 30 in die Sicherungselement-Normalstellung zurück, wodurch das Betätigungselement 26 in die Ruhelage zurückgestellt wird.

Zur Unterstützung der Rückstellkraft der Sicherungselemente 30 kann ein Rückstellelement, insbesondere eine Feder vorgesehen sein, die das Betätigungselement 26 nach einer Betätigung bzw. bei Freigabe aus der jeweiligen Betätigungslage in die Ruhelage zurückstellt.

In dem Sicherungszustand des Sicherungsmechanismus 16 befindet sich die Tischplatte 12 in der ersten Endposition und die Sicherungselemente 30 sind in der Sicherungselement-Normalstellung. Hierbei sind die Sicherungselemente 30 jeweils durch eine korrespondierende Ausnehmung 62 der Querstrebe 18 hindurchgeführt und deren Sicherungshaken 32 hintergreifen die Querstrebe 18. Hierdurch ist die Tischplatte 12 an dem Tischgestell 14 bzw. der Querstrebe 18 gesichert bzw. ein Verschieben der Tischplatte 12 gegenüber dem Tischgestell 14 wird verhindert. Die Anschlagelemente 38 durchdringen in dem Sicherungszustand gemeinsam eine erste Ausnehmung 58 und eine zweite Ausnehmung 60 der Querstrebe 18.

Die Sicherungselemente 30 können durch Betätigen des Betätigungselements 26 aus der Sicherungselement-Normalstellung in die Sicherungselement-Freigabestellung verstellt werden, in der die Sicherungshaken 32 die Querstrebe 18 nicht mehr hintergreifen und die Sicherungselemente 30 aus den Ausnehmungen 62 entfernt werden können.

Die Anschlagelemente 38 haben jeweils eine keilförmige Aufdickung 64. Die Aufdickungen 64 sind in Tischhochrichtung in einem dem Betätigungselement 26 gegenüberliegenden Bereich ausgebildet. Die Aufdickungen 64 wirken mit den Führungselementen 54 des Betätigungselements 26 derart zusammen, dass die Anschlagelemente 38 beim Verschieben des Betätigungselements 26 in die erste Betätigungslage, d.h. in Richtung der ersten Endposition der Tischplatte 12 aus der Anschlagelement-Normalstellung in die Anschlagelement-Freigabestellung verstellt werden. In der Anschlagelement-Normalstellung fahren die Anschlagelemente 38, wenn die Tischplatte 12 in Richtung der ersten Endstellung verschoben wird, auf die Querstrebe 18 auf. Hierdurch wird ein weiteres Verstellen der Tischplatte 12 in Richtung der ersten Endposition verhindert. Befinden sich die Anschlagelemente 38 hingegen in der Anschlagelement-Freigabestellung, kann die Tischplatte 12 weiter in Richtung der ersten Endposition verfahren werden und der Sicherungsmechanismus 16 in den Sicherungszustand verstellt werden.

An einem in montiertem Zustand des Sicherungsmechanismus 16 der Querstrebe 18 zugewandten Ende umfassen die Anschlagelemente 38 jeweils eine Rampe 40. Wird die Tischplatte 12 ausgehend von ihrer ersten Endposition in Richtung ihrer zweiten Endposition verfahren, werden die Anschlagelemente 38 durch das Zusammenwirken der Rampen 40 und der Querstrebe 18 aus der Anschlagelement-Normalstellung in die Anschlagelement-Freigabestellung verfahren und können aus der ersten Ausnehmung 58 und der zweiten Ausnehmung 60 der Querstrebe 18 gezogen werden.

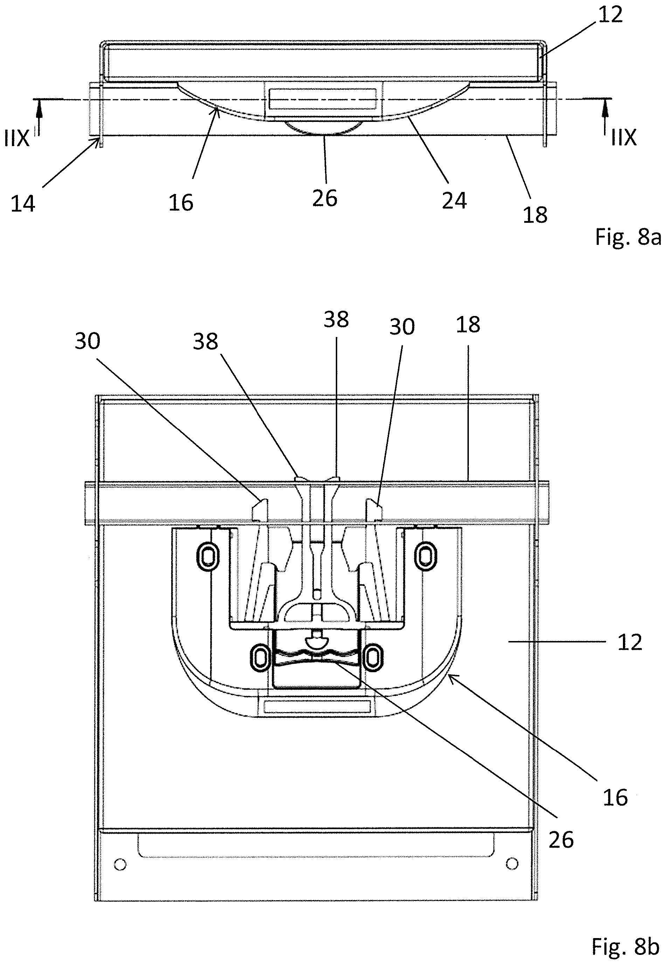

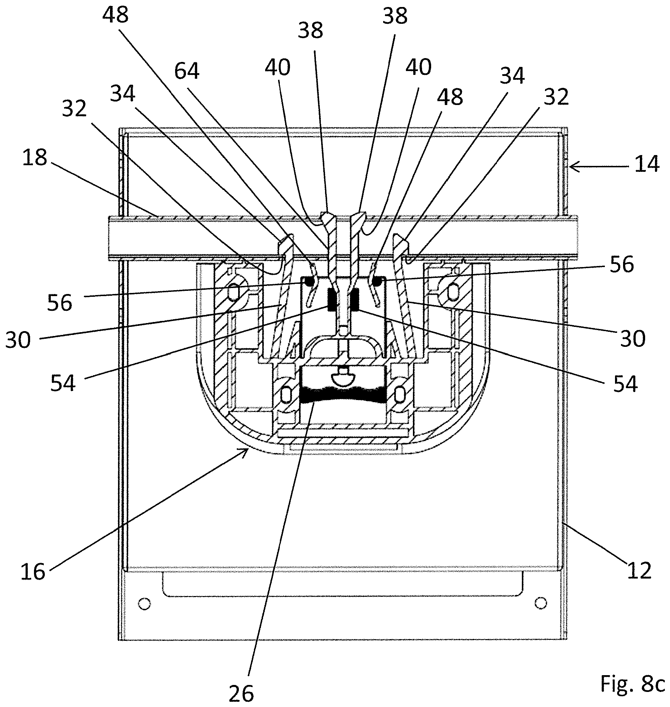

Die Funktionsweise des Tischs 10 wird im Folgenden unter Bezugnahme auf die Figuren 8a bis 13c näher beschrieben. In den Figuren ist ein Teilbereich des Tischs 1 dargestellt, wobei die Tischplatte 12 in der ersten Endposition und verschiedenen Zwischenpositionen dargestellt ist.

Die Figuren 8a bis 8c zeigen die Tischplatte 12 in der ersten Endstellung, wobei der Sicherungsmechanismus 16 in dem Sicherungszustand ist und die Tischplatte 12 an der Querstrebe 18 sichert. Die Sicherungselemente 30 sind jeweils durch die korrespondierende Ausnehmung 58 der Querstrebe 18 hindurchgeführt und die Sicherungshaken 32 der Sicherungselemente hintergreifen jeweils die Querstrebe 18. Die beiden Anschlagelemente 38 sind gemeinsam durch die erste Ausnehmung 58 und die zweite Ausnehmung 60 hindurchgeführt.

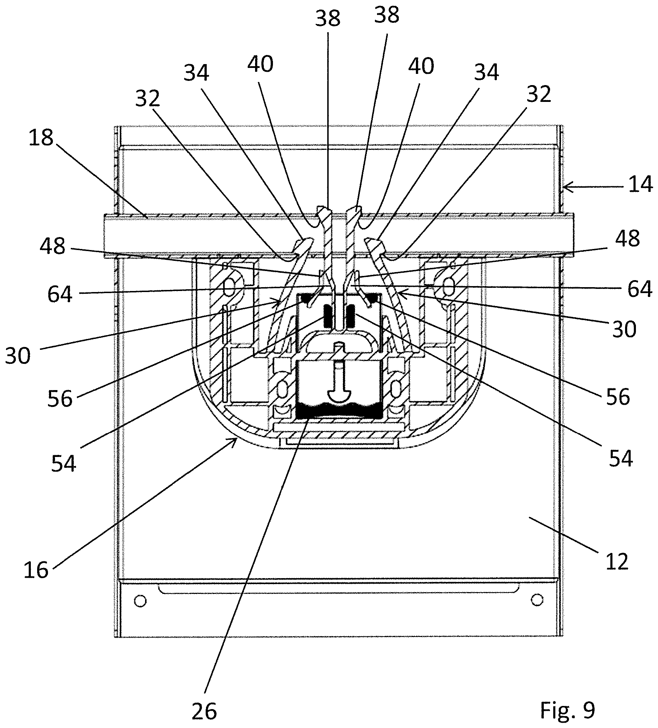

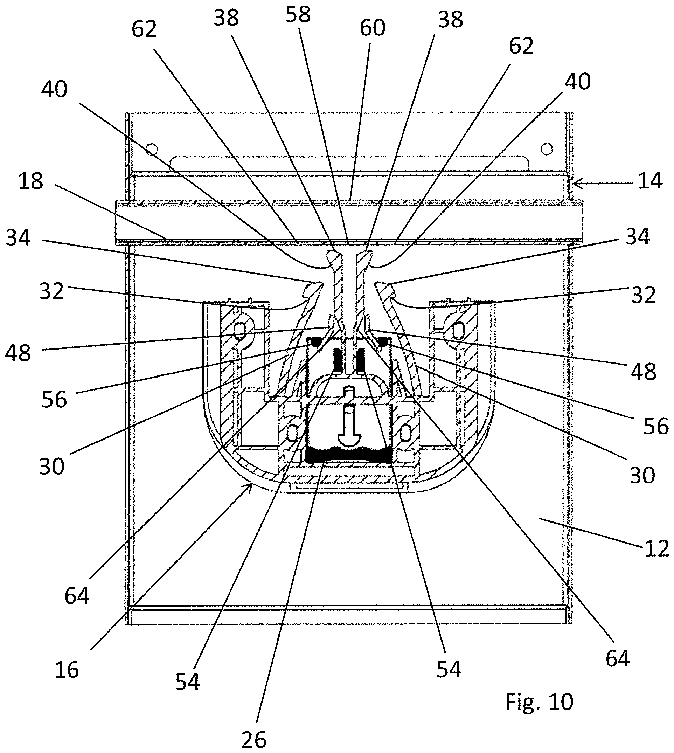

Wird das Betätigungselement 26, wie in Figur 9 dargestellt, in die zweite Betätigungslage verschoben, d.h. in Richtung der zweiten Endposition der Tischplatte 12, werden die Sicherungselemente 30 aus der Sicherungselement-Normalstellung in die Sicherungselement-Freigabestellung verstellt und der Sicherungsmechanismus 16 befindet sich in dem Freigabezustand. In diesem Zustand kann die Tischplatte 12 gegenüber dem Tischgestell 14 aus der ersten Endposition in Richtung der zweiten Endposition verschoben werden (siehe Figur 10). Bei einem derartigen Verschieben werden die Anschlagelemente 38 in eine Anschlagelement-Freigabestellung gebracht und aus der ersten Ausnehmung 58 und der zweiten Ausnehmung 60 geführt. Dies erfolgt durch das Zusammenwirken der Abschrägungen 48 der Anschlagelemente 38 mit der Querstrebe 18.

Aufgrund der kurvenbahnartigen Ausgestaltung der Führungselemente 38 können die Sicherungselemente 30 sowohl durch ein Verschieben in Richtung der ersten Endposition der Tischplatte 12 als auch durch ein Verschieben in Richtung der zweiten Endposition der Tischplatte 12 in die Sicherungselement-Freigabestellung verstellt werden.

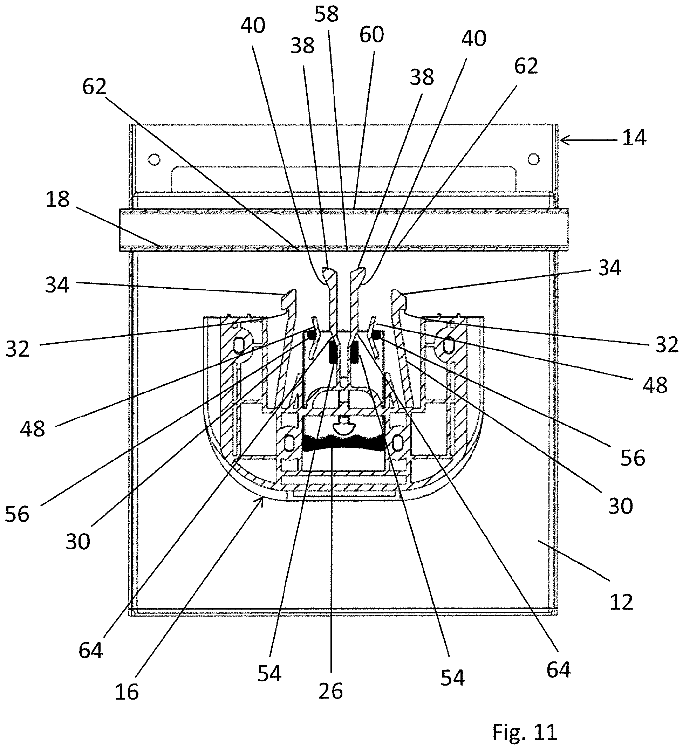

Wird anschließend die Betätigung des Betätigungselements 26 beendet, kehren die Sicherungselemente 30 in die Sicherungselement-Normalstellung zurück. Durch das Zusammenwirken der Führungselemente 48 der Sicherungselemente 30 und der Zapfen 56 des Betätigungselements 26 bewirkt das Rückstellen der Sicherungselemente 30 gleichzeitig ein Verschieben bzw. Rückstellen des Betätigungselements 26 in die Ruhestellung (siehe Figur 11).

Bei dem Verstellen der Tischplatte 12 aus der ersten Endposition in Richtung der zweiten Endposition wirken die Rampen 40 der Anschlagelemente 38 mit der Querstrebe 18 des Tischgestells 14 zusammen. Hierdurch werden die Anschlagelemente 38 aus der Anschlagelement-Normalstellung elastisch in die Anschlagelement-Freigabestellung verstellt. Besteht kein Kontakt mehr zwischen den Rampen 40 der Anschlagelemente 38 und der Querstrebe 18, stellen sich die Anschlagelemente 38 in die Anschlagelement-Normalstellung zurück.

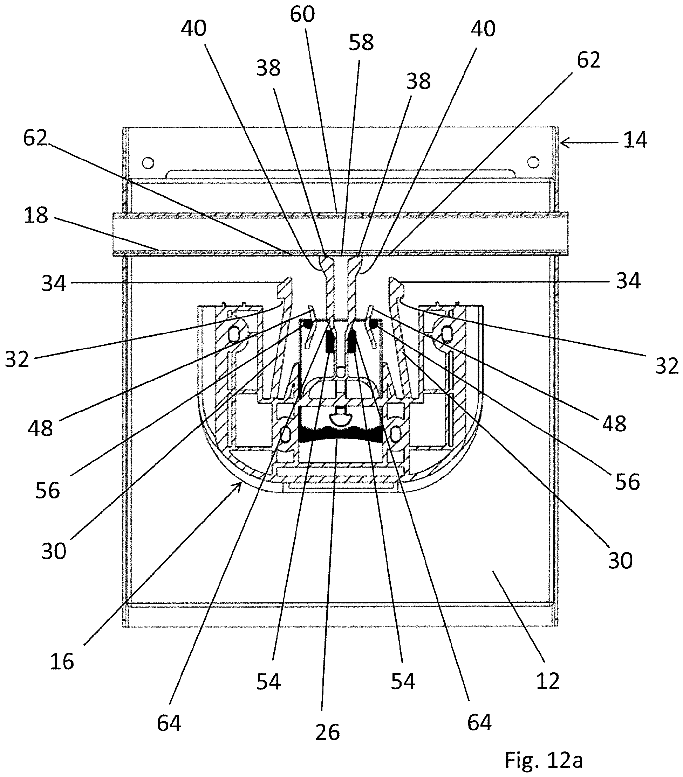

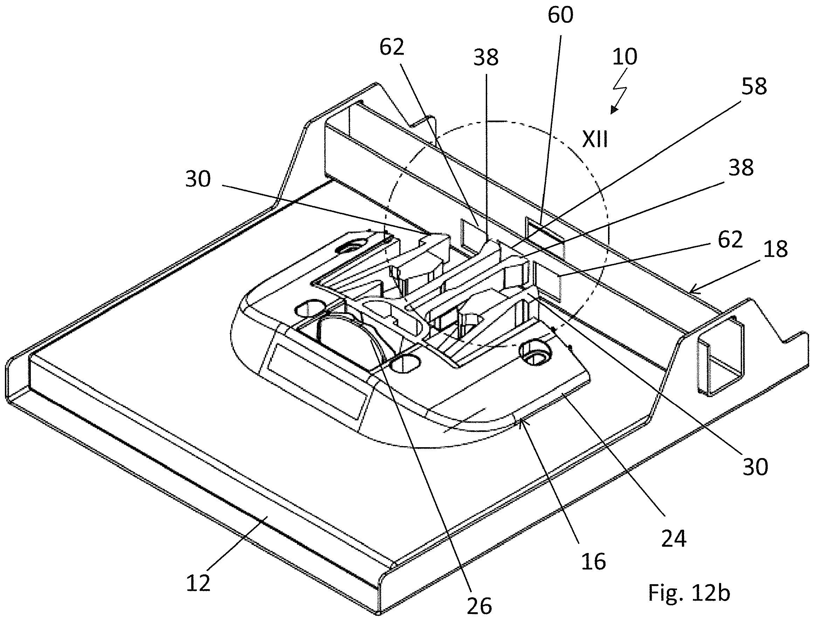

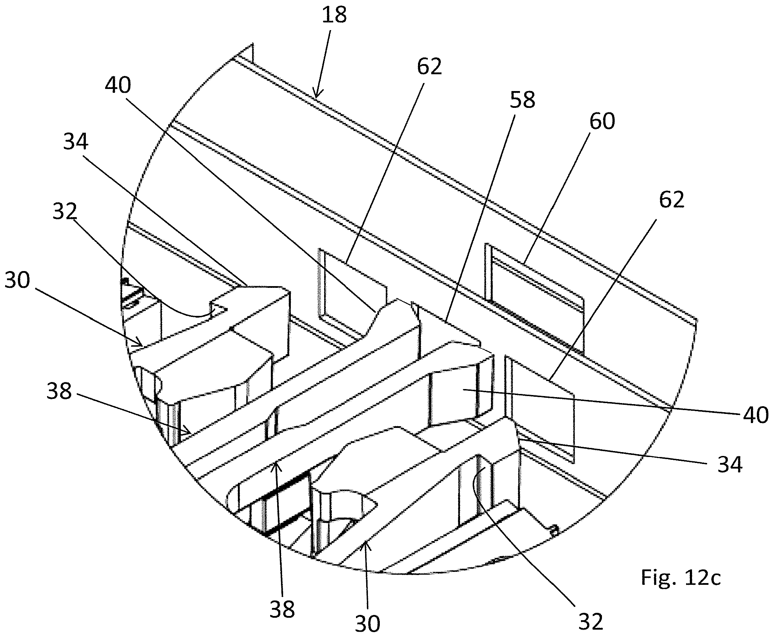

Wird die Tischplatte 12 aus der zweiten Endposition in Richtung der erste Endposition verstellt, fährt das Anschlagelement 38, wenn es sich in der Anschlagelement-Normalstellung befindet, auf die Querstrebe 18 auf (siehe Figuren 12a bis 12b). Somit wird ein weiteres Verschieben der Tischplatte 12 in Richtung der ersten Endposition verhindert und ein Einklemmschutz bereitgestellt.

Befindet sich also ein Nutzer an der Vorderseite des Tischs 10 und beugt sich nach vorne, um beispielsweise Kabel in dem nach obenhin geöffneten Kabelkanal 20 zu verstauen, ist gewährleistet, dass die Tischplatte 12 sich nicht weiter in Richtung der ersten Endstellung verstellt, auch wenn der Nutzer hierbei an die Tischplatte 12 stößt und somit die Tischplatte 12 mit einer in Richtung der ersten Endstellung wirkenden Kraft beaufschlagt.

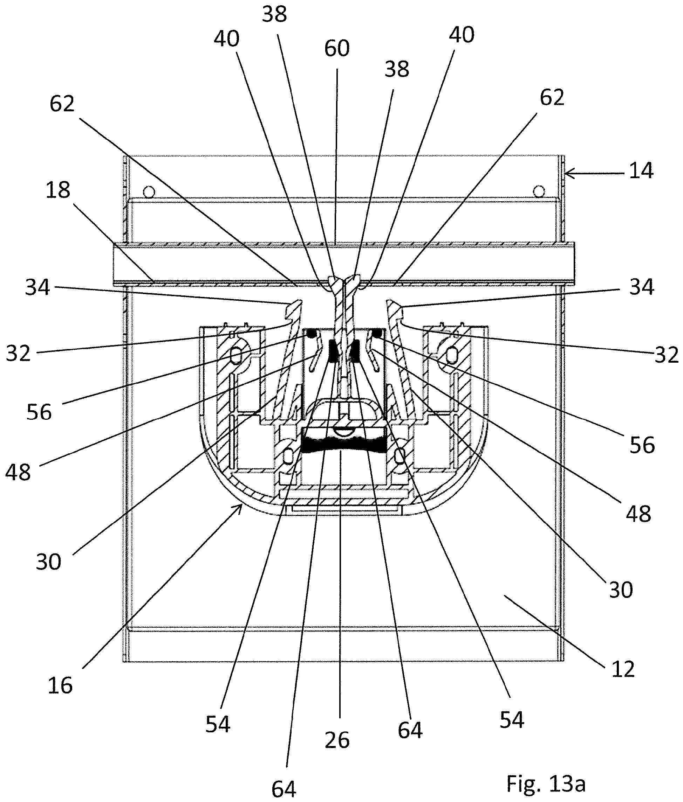

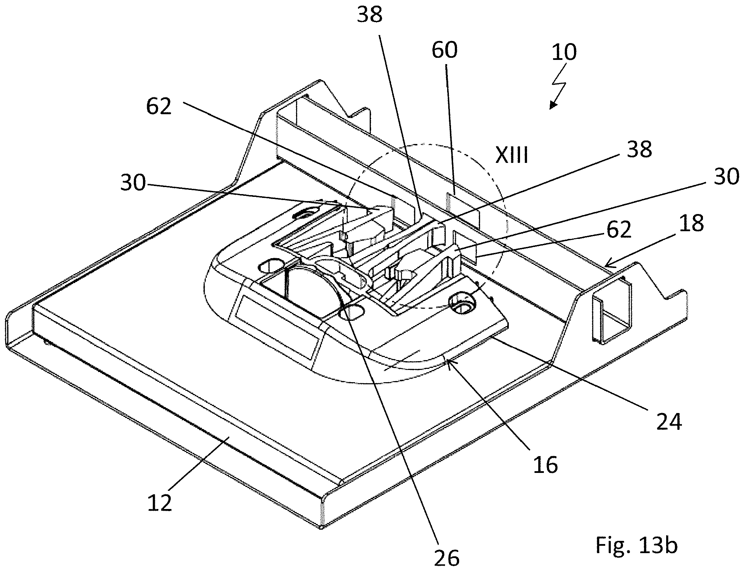

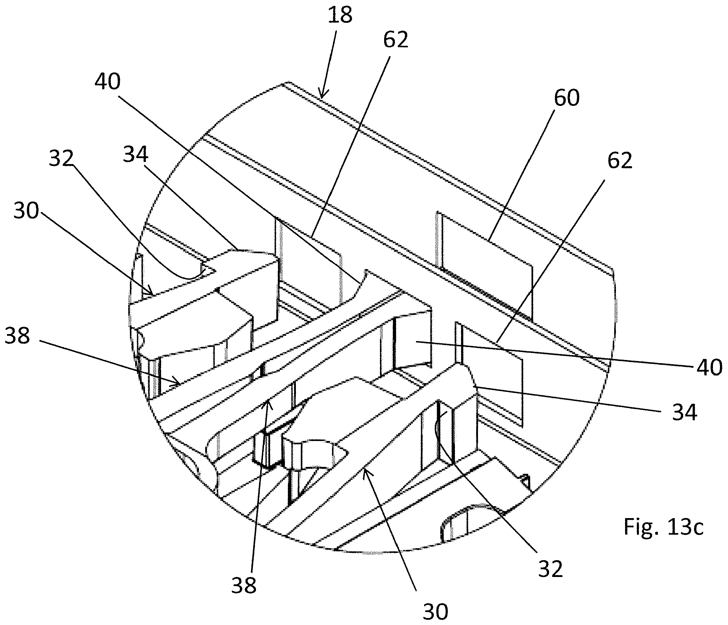

Um die Tischplatte 12 weiter in Richtung der ersten Endposition zu verschieben, wird das Betätigungselement 26, wie in den Figuren 13a und 13b dargestellt, manuell in Richtung der Querstrebe 18 in die erste Betätigungslage gedrückt und damit gegenüber dem Grundkörper 24 verschoben. Hierdurch werden zum einen die beiden Anschlagelemente 38 durch das Zusammenwirken ihrer Aufdickungen 64 mit dem betreffenden Führungselement 54 des Betätigungselements 26 in die Anschlagelement-Freigabestellung verstellt. Anschließend werden die Anschlagelemente 38 durch die erste Ausnehmung 58 und die zweite Ausnehmung 60 der Querstrebe 18 hindurchgeführt. Zum anderen werden die Sicherungselemente 30 durch das Zusammenwirken ihrer Führungselemente 48 mit dem betreffenden Zapfen 56 des Betätigungselements 26 in die Sicherungselement-Freigabestellung verstellt und dann jeweils durch die entsprechende Ausnehmung 62 geführt.

Wenn dann das Betätigungselement 26 freigegeben wird, d.h. der manuelle Druck gelöst wird, stellen sich die Sicherungselemente 30 in ihre Sicherungselement-Normalstellung, so dass die Tischplatte in der ersten Endposition an dem Tischgestell 14 gesichert ist.

### Bezugszeichenliste

- 10: Tisch
- 12: Tischplatte
- 14: Tischgestell
- 16: Sicherungsmechanismus
- 18: Querstrebe
- 20: Kabelkanal
- 22: Ausnehmung
- 24: Grundkörper
- 26: Betätigungselement
- 28: Greifelement
- 30: Sicherungselement
- 32: Sicherungshaken
- 34: Schräge
- 38: Anschlagelement
- 40: Rampe
- 42: Rippe
- 44: Aufnahme
- 46: Ausnehmung
- 48: Führungselement
- 50: Grundplatte
- 54: Führungselement
- 56: Zapfen
- 58: erste Ausnehmung
- 60: zweite Ausnehmung
- 62: Ausnehmung
- 64: Aufdickung

## Patentansprüche

1. Möbel, umfassend ein erstes Möbelelement (12), ein zweites Möbelelement (14) und einen Sicherungsmechanismus (16) zur Sicherung des ersten Möbelelements (12) an dem zweiten Möbelelement (14), wobei der Sicherungsmechanismus (16) mindestens ein Sicherungselement (30) und einen Grundkörper (24) mit einer Aufnahme (44) umfasst und zwischen einem Sicherungszustand, in dem das erste Möbelelement (12) an dem zweiten Möbelelement (14) gesichert ist, und einem Freigabezustand verstellbar ist, in dem das erste Möbelelement (12) gegenüber dem zweiten Möbelelement (14) bewegbar ist, **dadurch gekennzeichnet, dass** der Sicherungsmechanismus (16) ein Betätigungselement (26) umfasst, das in der Aufnahme (44) aus einer Ruhelage in zwei Richtungen, die den Verschieberichtungen des ersten Möbelelements (12) gegenüber dem zweiten Möbelelement (14) entsprechen, jeweils in eine Betätigungslage verschiebbar gelagert ist, in der das Betätigungselement (26) derart mit dem Sicherungselement (30) zusammenwirkt, dass das Sicherungselement (30) in einer Sicherungselement-Freigabestellung ist, in der der Sicherungsmechanismus (16) aus dem Sicherungszustand in den Freigabezustand verstellbar ist.

2. Möbel nach Anspruch 1, **dadurch gekennzeichnet, dass** das Sicherungselement (30) an einem dem zweiten Möbelelement (14) zugewandten Ende einen Vorsprung (32) umfasst, der das zweite Möbelelement (14) in dem Sicherungszustand des Sicherungsmechanismus (16) hintergreift.

3. Möbel nach Anspruch 1 oder 2, **dadurch gekennzeichnet, dass** das Sicherungselement (30) an einem dem zweiten Möbelelement (14) zugewandten Ende eine Schräge (34) umfasst, die, wenn der Sicherungsmechanismus (16) aus dem Freigabezustand in den Sicherungszustand verstellt wird, mit dem zweiten Möbelelement (14) derart zusammenwirkt, dass das Sicherungselement (30) in die Sicherungselement-Freigabestellung verstellt wird.

4. Möbel nach einem der Ansprüche 1 bis 3, **dadurch gekennzeichnet, dass** das Sicherungselement (30) ein erstes Führungselement (48) umfasst, das mit einem Zapfen (56) des Betätigungselements (26) derart zusammenwirkt, dass das Sicherungselement (30) bei Betätigung des Betätigungselements (26) in die Sicherungselement-Freigabestellung verstellt wird.

5. Möbel nach Anspruch 4, **dadurch gekennzeichnet, dass** das erste Führungselement (48) eine Kurvenbahn aufweist.

6. Möbel nach einem der Ansprüche 1 bis 5, **dadurch gekennzeichnet, dass** das Sicherungselement (30) elastisch verformbar ist, so dass es sich bei Freigabe selbstständig in die Sicherungselement-Normalstellung zurückstellt.

7. Möbel nach einem der Ansprüche 1 bis 6, **gekennzeichnet durch** mindestens ein Anschlagelement (38), das durch Verschieben des Betätigungselements (26) in eine erste der beiden Richtung aus einer Anschlagelement-Normalstellung in eine Anschlagelement-Freigabestellung verstellbar ist, wobei ein Verstellen des Sicherungsmechanismus (16) in den Sicherungszustand gesperrt ist, wenn das Anschlagelement (38) in der Anschlagelement-Normalstellung ist, und der Sicherungsmechanismus (16) in den Sicherungszustand verstellbar ist, wenn das Anschlagelement (38) in der Anschlagelement-Freigabestellung ist.

8. Möbel nach Anspruch 7, **dadurch gekennzeichnet, dass** das Anschlagelement (38) an einem dem zweiten Möbelelement (14) zugewandten Ende eine Rampe (40) umfasst, die, wenn der Sicherungsmechanismus (16) aus dem Sicherungszustand in den Freigabezustand verstellt wird, mit dem zweiten Möbelelement (14) derart zusammenwirkt, dass das Anschlagelement (38) in die Anschlagelement-Freigabestellung verstellt wird.

9. Möbel nach Anspruch 7 oder 8, **dadurch gekennzeichnet, dass** das Betätigungselement (26) ein Führungselement (54) umfasst, das mit einer Aufdickung des Anschlagelements (38) derart zusammenwirkt, dass das Anschlagelement (38) in die Anschlagelement-Freigabestellung verstellt wird, wenn das Betätigungselement (26) in die erste Richtung verschoben wird.

10. Möbel nach einem der Ansprüche 7 bis 9, **dadurch gekennzeichnet, dass** das Anschlagelement (38) elastisch verformbar ist, so dass es sich bei Freigabe selbstständig in die Anschlagelement-Normalstellung zurückstellt..

11. Möbel nach Anspruch 10, **dadurch gekennzeichnet, dass** der Grundkörper (24) ein einstückiges Kunststoffspritzteil ist und vorzugsweise Verstärkungsrippen umfasst.

12. Möbel nach einem der Ansprüche 1 bis 11, **dadurch gekennzeichnet, dass** der Sicherungsmechanismus (16) zwei Sicherungselemente (30) und zwei Anschlagelemente (38) umfasst.

13. Möbel nach einem der Ansprüche 1 bis 12, **dadurch gekennzeichnet, dass** der Sicherungsmechanismus (16) ein Rückstellelement umfasst, welches das Betätigungselement (26) bei Freigabe in die Ruhelage zurückstellt.

14. Möbel nach einem der Ansprüche 1 bis 13, **dadurch gekennzeichnet, dass** es ein Tisch (10) ist, das erste Möbelelement (12) eine Tischplatte ist und das zweite Möbelelement (14) ein Tischgestell ist.

## Claims

1. A piece of furniture, comprising a first furniture element (12), a second furniture element (14) and a securing mechanism (16) for securing the first furniture element (12) on the second furniture element (14), the securing mechanism (16) comprising at least one securing element (30) and a base body (24) having a seat (44) and being movable between a securing state in which the first furniture element (12) is secured on the second furniture element (14) and a release state in which the first furniture element (12) is movable relative to the second furniture element (14), **characterized in that** the securing mechanism (16) comprises an actuating element (26) which is mounted in the seat (44) so as to be displaceable in two directions corresponding to the displacement directions of the first furniture element (12) relative to the second furniture element (14) into one actuating position per direction from a rest position, the actuating element (26) interacting with the securing element (30) in the actuating position in such a manner that the securing element (30) is in a securing element release position in which the securing mechanism (16) is movable from the securing state into the release state.

2. The piece of furniture according to claim 1, **characterized in that** the securing element (30) comprises a projection (32) at an end facing the second furniture element (14), said projection (32) engaging behind the second furniture element (14) in the securing state of the securing mechanism (16).

3. The piece of furniture according to claim 1 or 2, **characterized in that** the securing element (30) comprises a bevel (34) at an end facing the second furniture element (14), said bevel (34) interacting with the second furniture element (14) in such a manner that the securing element (30) is moved into the securing element release position when the securing mechanism (16) is moved from the release state into the securing state.

4. The piece of furniture according to any one of claims 1 to 3, **characterized in that** the securing element (30) comprises a first guiding element (48) which interacts with a pin (56) of the actuating element (26) in such a manner that the securing element (30) is moved into the securing element release position when the actuating element (26) is actuated.

5. The piece of furniture according to claim 4, **characterized in that** the first guiding element (48) has a curved path.

6. The piece of furniture according to any one of claims 1 to 5, **characterized in that** the securing element (30) is elastically deformable such that it automatically returns to the securing element normal position in the case of release.

7. The piece of furniture according to any one of claims 1 to 6, **characterized by** at least one stop element (38) which is movable from a stop element normal position into a stop element release position by displacing the actuating element (26) in a first of the two directions, a moving of the securing mechanism (16) into the securing state being blocked when the stop element (38) is in the stop element normal position, and the securing mechanism (16) being movable into the securing state when the stop element (38) is in the stop element release position.

8. The piece of furniture according to claim 7, **characterized in that** the stop element (38) comprises a ramp (40) at an end facing the second furniture element (14), said ramp (40) interacting with the second furniture element (14) in such a manner that the stop element (38) is moved into the stop element release position when the securing mechanism (16) is moved from the securing state into the release state.

9. The piece of furniture according to claim 7 or 8, **characterized in that** the actuating element (26) comprises a guiding element (54) which interacts with a thickening of the stop element (38) in such a manner that the stop element (38) is moved into the stop element release position when the actuating element (26) is displaced in the first direction.

10. The piece of furniture according to any one of claims 7 to 9, **characterized in that** the stop element (38) is elastically deformable such that it automatically returns to the stop element normal position in the case of release.

11. The piece of furniture according to claim 10, **characterized in that** the base body (24) is an integral plastic injection-molded part and comprises preferably reinforcing ribs.

12. The piece of furniture according to any one of claims 1 to 11, **characterized in that** the securing mechanism (16) comprises two securing elements (30) and two stop elements (38).

13. The piece of furniture according to any one of claims 1 to 12, **characterized in that** the securing mechanism (16) comprises a return element which returns the actuating element (26) to the rest position in the case of release.

14. The piece of furniture according to any one of claims 1 to 13, **characterized in that** it is a table (10), the first furniture element (12) is a tabletop and the second furniture element (14) is a table frame.

## Revendications

1. Meuble, comprenant un premier élément de meuble (12), un deuxième élément de meuble (14) et un mécanisme de fixation (16) pour fixer le premier élément de meuble (12) sur le deuxième élément de meuble (14), le mécanisme de fixation (16) comprenant au moins un élément de fixation (30) et un corps de base (24) ayant un logement (44) et étant mobile entre un état de fixation dans lequel le premier élément de meuble (12) est fixé sur le deuxième élément de meuble (14) et un état de déblocage dans lequel le premier élément de meuble (12) est mobile par rapport au deuxième élément de meuble (14), **caractérisé en ce que** le mécanisme de fixation (16) comprend un élément d'actionnement (26) qui es monté dans le logement (44) de manière à être déplaçable à partir d'une position de repos dans deux directions qui correspondent aux directions de déplacement du premier élément de meuble (12) par rapport au deuxième élément de meuble (14) dans une position d'actionnement par direction, l'élément d'actionnement (26) interagissant avec l'élément de fixation (30) dans la position d'actionnement de manière que l'élément de fixation (30) est dans une position de déblocage de l'élément de fixation dans laquelle le mécanisme de fixation (16) est mobile à partir d'un état de fixation dans un état de déblocage.

2. Meuble selon la revendication 1, **caractérisé en ce que** l'élément de fixation (30) comprend une saillie (32) sur une extrémité orientée vers le deuxième élément de meuble (14), ladite saillie (32) venant en prise derrière le deuxième élément de meuble (14) dans l'état de fixation du mécanisme de fixation (16).

3. Meuble selon la revendication 1 ou 2, **caractérisé en ce que** l'élément de fixation (30) comprend un biseau (34) sur une extrémité orientée vers le deuxième élément de meuble (14), ledit biseau (34) interagissant avec le deuxième élément de fixation (14) de manière que l'élément de fixation (30) est mû dans la position de déblocage de l'élément de fixation lorsque le mécanisme de fixation (16) est mû à partir de l'état de déblocage dans l'état de fixation.

4. Meuble selon l'une quelconque des revendications 1 à 3, **caractérisé en ce que** l'élément de fixation (30) comprend un premier élément de guidage (48) qui interagit avec un tenon (56) de l'élément d'actionnement (26) de manière que l'élément de fixation (30) est mû dans la position de déblocage de l'élément de fixation lorsque l'élément d'actionnement (26) est actionné.

5. Meuble selon la revendication 4, **caractérisé en ce que** le premier élément de guidage (48) a un chemin incurvé.

6. Meuble selon l'une quelconque des revendications 1 à 5, **caractérisé en ce que** l'élément de fixation (30) est élastiquement déformable de manière qu'il se remet automatiquement dans la position normale de l'élément de fixation lors d'un déblocage.

7. Meuble selon l'une quelconque des revendications 1 à 6, **caractérisé par** au moins un élément de butée (38) qui est mobile à partir d'une position normale de l'élément de butée dans une position de déblocage de l'élément de butée en déplaçant l'élément d'actionnement (26) dans une première direction des deux directions, un mouvement du mécanisme de fixation (16) dans l'état de fixation étant bloqué lorsque l'élément de butée (38) est dans la position normale de l'élément de butée, et le mécanisme de fixation (16) étant mobile dans l'état de fixation lorsque l'élément de butée (38) est dans la position de déblocage de l'élément de butée.

8. Meuble selon la revendication 7, **caractérisé en ce que** l'élément de butée (38) comprend une rampe (40) sur une extrémité orientée vers le deuxième élément de meuble (14), ladite rampe (40) interagissant avec le deuxième meuble (14) de manière que l'élément de butée (38) est mû dans la position de déblocage de l'élément de butée lorsque le mécanisme de fixation (16) est mû à partir de l'état de fixation dans l'état de déblocage.

9. Meuble selon la revendication 7 ou 8, **caractérisé en ce que** l'élément d'actionnement (26) comprend un élément de guidage (54) qui interagit avec une partie épaissie de l'élément de butée (38) de manière que l'élément de butée (38) est mû dans la position de déblocage de l'élément de butée lorsque l'élément d'actionnement (26) est déplacé dans la première direction.

10. Meuble selon l'une quelconque des revendications 7 à 9, **caractérisé en ce que** l'élément de butée (38) est élastiquement déformable de manière qu'il se remet automatiquement dans la position normale de l'élément de butée lors d'un déblocage.

11. Meuble selon la revendication 10, **caractérisé en ce que** le corps de base (24) est une pièce moulée par injection en plastique d'un seul tenant et comprend de préférence des nervures de renfort.

12. Meuble selon l'une quelconque des revendications 1 à 11, **caractérisé en ce que** le mécanisme de fixation (16) comprend deux éléments de fixation (30) et deux éléments de butée (38).

13. Meuble selon l'une quelconque des revendications 1 à 12, **caractérisé en ce que** le mécanisme de fixation (16) comprend un élément de rappelle qui remet l'élément d'actionnement (26) dans la position de repos lors d'un déblocage.

14. Meuble selon l'une quelconque des revendications 1 à 13, **caractérisé en ce qu'**il est une table (10), le premier élément de meuble (12) est un plateau de table et le deuxième élément de meuble (14) est un cadre de table.
